(19) **Europäisches Patentamt European Patent Office Office européen des brevets**

(11) **EP 4 768 901 A1**

(12) **EUROPEAN PATENT APPLICATION**
published in accordance with Art. 153(4) EPC

(43) Date of publication:
**01.07.2026 Bulletin 2026/27**

(21) Application number: **24856551.7**

(22) Date of filing: **26.08.2024**

(51) International Patent Classification (IPC):
*G01N 25/18* (2006.01)

(52) Cooperative Patent Classification (CPC):
**G01N 25/18**

(86) International application number:
**PCT/JP2024/030308**

(87) International publication number:
**WO 2025/041863 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.08.2023 JP 2023136623**

(71) Applicants:
• **Altex Corporation**
  **Komae-shi, Tokyo 201-0012 (JP)**
• **TOKYO UNIVERSITY OF SCIENCE FOUNDATION**
  **Tokyo 162-8601 (JP)**
• **Kake Educational Institution**
  **Okayama University Of Science**
  **Okayama-shi, Okayama 700-0005 (JP)**

(72) Inventors:
• **IMAI, Koji**
  **Komae-shi, Tokyo 201-0012 (JP)**
• **IIDA, Tsutomu**
  **Tokyo 162-8601 (JP)**
• **KUROKAWA, Hiroyuki**
  **Tokyo 162-8601 (JP)**
• **ASAHARA, Hiroyuki**
  **Okayama-shi, Okayama 700-0005 (JP)**

(74) Representative: **Meissner Bolte Partnerschaft mbB**
**Patentanwälte Rechtsanwälte**
**Postfach 86 06 24**
**81633 München (DE)**

(54) **THERMAL CONDUCTANCE MEASUREMENT METHOD AND THERMAL CONDUCTANCE MEASUREMENT SYSTEM**

(57) [Problem] Thermal conductance of a heat source is grasped to contribute to the effective utilization of unused thermal energy.

[Solution] A thermal conductance measuring method includes: connecting the other end of a thermal conduction path to a heat source to be measured, the thermal conduction path having a cooling source at one end (S10); installing a heating element in the thermal conduction path, the heating element controllable to fluctuate a heat generation amount by applying fluctuating heating energy to the heating element; measuring a temperature within the thermal conduction path and acquiring a first temperature affected by heat generation by the heating element and a second temperature not affected by heat generation by the heating element (S30, S50); and calculating thermal conductance of the heat source based on a difference between the first temperature and the second temperature (S60) and the heating energy when the first temperature was measured (S80). Since this allows the thermal conductance of the heat source to be calculated without the need to grasp a specific heat, mass, or the like of the heat source, it is possible to contribute to the effective utilization of the unused thermal energy possessed by the heat source.

EP 4 768 901 A1

# FIG. 4

```
              ┌─────────────┐
              │    Start    │
              └─────────────┘
                     │
                     ▼
S10 ──┐  ┌──────────────────────────────────┐
      └──│   Connect Thermal Conduction Path │
         └──────────────────────────────────┘
                     │
                     ▼
S20 ──┐  ┌──────────────────────────────────┐
      └──│      Control Heating Element      │
         └──────────────────────────────────┘
                     │
                     ▼
S30 ──┐  ┌──────────────────────────────────┐
      └──│        Measure Temperature        │
         └──────────────────────────────────┘
                     │
                     ▼
S40 ──┐  ┌──────────────────────────────────┐
      └──│          Determine State          │
         └──────────────────────────────────┘
                     │
                     ▼
S50 ──┐  ┌──────────────────────────────────┐
      └──│     Calculate Average Temperature │
         └──────────────────────────────────┘
                     │
                     ▼
S60 ──┐  ┌──────────────────────────────────┐
      └──│       Calculate Difference        │
         └──────────────────────────────────┘
                     │
                     ▼
S70 ──┐  ┌──────────────────────────────────┐
      └──│     Extract Frequency Component   │
         └──────────────────────────────────┘
                     │
                     ▼
S80 ──┐  ┌──────────────────────────────────┐
      └──│    Calculate Thermal Conductance  │
         └──────────────────────────────────┘
                     │
                     ▼
S90 ──┐  ┌──────────────────────────────────┐
      └──│    Calculate Thermal Resistance   │
         └──────────────────────────────────┘
                     │
                     ▼
              ┌─────────────┐
              │     End     │
              └─────────────┘
```

**Description**

TECHNICAL FIELD

The present invention relates to a thermal conductance measuring method and a thermal conductance measuring system for measuring the thermal conductance of a heat source.

BACKGROUND ART

For example, thermal energy that is discarded as exhaust heat is present in industrial plants that handle thermal energy, various devices using heat sources, combustion devices, internal combustion engines, incinerators, flow passages through which hot spring water flows, exhaust ducts, chimneys, steam piping, and the like. While research on the effective utilization of such unused thermal energy has been conventionally conducted (for example, see Patent Documents 1 and 2), a large amount of thermal energy is still released into the atmosphere, which contributes to global warming and the like.

CITED DOCUMENTS

PATENT LITERATURE

   Patent Document 1: Japanese Patent No. 5299324
   Patent Document 2: JP-A-2014-174027

DISCLOSURE OF THE INVENTION

PROBLEMS TO BE SOLVED BY THE INVENTION

Here, in order to effectively utilize the unused thermal energy from a heat source, an effective approach is to perform a simulation based on basic information such as the heat-receiving area of a high-temperature-side heat source to which a heat exchanger or the like is attached, the amount of heat received per unit area, the heat dissipation on a cold-source side, and information on an exhaust heat system. The most important factor in such a simulation is thermal conductance at a heat-receiving point, which represents the thermal resistance of the heat source and is required to measure and estimate in advance the amount of heat received flowing in through a heat exchanger or the like. However, the importance of thermal conductance has been overlooked in the effective utilization of unused thermal energy.
The present invention has been made in consideration of the above problem, and an object of the present invention is to grasp the thermal conductance of a heat source to contribute to the effective utilization of unused thermal energy.

SOLUTIONS TO THE PROBLEMS

(Aspects of Invention)

The following aspects of the invention are exemplary configurations of the present invention. In order to facilitate understanding of the various configurations of the present invention, a description will be given by dividing it into numbered items. Each aspect does not limit the technical scope of the present invention. Therefore, the technical scope of the present invention can also include configurations where some of the components in each item are substituted or deleted, or another component is further added, while referring to the best modes for carrying out the invention.
   (1) A method for measuring thermal conductance of a heat source comprising: connecting the other end of a thermal conduction path to the heat source, the thermal conduction path having a cooling source at one end; installing a heating element in the thermal conduction path, the heating element being controllable to fluctuate a heat generation amount by applying fluctuating heating energy to the heating element; measuring a temperature within the thermal conduction path and acquiring a first temperature affected by heat generation by the heating element and a second temperature not affected by heat generation by the heating element; and calculating the thermal conductance of the heat source based on a difference between the first temperature and the second temperature and the heating energy when the first temperature was measured.

The thermal conductance measuring method according to this item includes measuring the thermal conductance of a heat source having unused thermal energy that has been exhausted. Specifically, by connecting the other end of a thermal conduction path having a cooling source at one end to the heat source, heat is diverted so as to flow from the heat source toward the cooling source. The thermal conduction path used at this time is formed from a material whose properties, such as thermal conductivity, are grasped in advance. In addition, a heating element is installed in the thermal conduction path, that is, between one end of the thermal conduction path, where the cooling source is installed, and the other end of the thermal conduction path connected to the heat source. As the heating element to be installed, a heating element that is controllable to fluctuate a heat generation amount by applying fluctuating heating energy to the heating element is used. Here, a thermal conduction path in which a heating element is installed in advance may be connected to the heat source.

Furthermore, by measuring the temperature within the thermal conduction path having the configuration as described above, the first temperature affected by heat generation by the heating element and the second temperature not affected by heat generation by the heating element are acquired. At this time, the first temperature may be the measurement of the temperature within the thermal conduction path when the heating element is subjected to control so as to fluctuate the heat generation amount. In contrast to this, depending on the situation, the second temperature may be calculated so that the effect of the heat generation by the heating element is eliminated from a measurement result of the first temperature, or it may be the measurement of the temperature within the thermal conduction path when the heating element is not generating heat. Subsequently, by calculating the difference between the first temperature and the second temperature acquired as described above, temperature change data that has changed due to the effect of the fluctuating heat generation of the heating element is extracted. Then, the thermal conductance of the heat source is calculated based on the extracted temperature change data and the heating energy applied to the heating element when the first temperature was measured.

Here, to mention the relationship between heat amount and temperature, the heat amount is proportional to temperature, with mass and specific heat as constants, in a region undergoing a small temperature change in which there is no phase change. In view of this, considering that the addition of heating energy has caused no change in mass and specific heat but an increase in temperature by the amount of temperature change data, "the product of mass and specific heat" can be represented as the value of "the heat amount in a state where no heating energy is received" divided by "the temperature in the state where no heating energy is received (second temperature)" or the value of "the heat amount in a state where heating energy is received" divided by "the temperature in the state where heating energy is received (first temperature)". Furthermore, "the product of mass and specific heat" can also be represented as the value of the heating energy divided by the temperature change data, provided that radiation and thermal conduction causing error are negligibly small.

Since thermal resistance is the value of the temperature difference between two points divided by the flow rate of heat flowing between the two points (the amount of heat flowing in unit time), it can be expressed as the value of the temperature change data divided by the heating energy in the relationship as described above. It can be seen that considering that this thermal resistance includes all the thermal resistances from the heat source to the thermal conduction path, and that the thermal conductance can be expressed as the reciprocal of the thermal resistance, as well as considering the heat-receiving area and the like of the thermal conduction path, the thermal conductance per unit area can be calculated from the temperature change data and the heating energy. As a result, the thermal conductance of the heat source is calculated based on the temperature change data that has changed due to the effect of the heating element and the heating energy applied to the heating element at that time, without the need to grasp the specific heat, mass, and the like of the heat source. The thermal conductance is thus grasped, therefore contributing to the effective utilization of the unused thermal energy possessed by the heat source. Moreover, the thermal conductance is grasped even when the information on the inside of the heat source, such as the specific heat and pressure of the heat source, and the density of physical properties, is unknown, or when the pressure and density of the heat source vary over time.

(2) The thermal conductance measuring method according to the above (1), comprising: utilizing a Peltier element as the heating element; applying an AC power at a predetermined frequency different from a fluctuating frequency of a heat flow from the heat source as the heating energy; and extracting data of a frequency component of the predetermined frequency from a calculation result of the difference between the first temperature and the second temperature, and calculating the thermal conductance of the heat source based on the extraction result.

In the thermal conductance measuring method according to the item, a Peltier element is utilized as the heating element installed in the thermal conduction path. In addition, the amount of heat generated from the Peltier element is alternately fluctuated by applying an AC power at a predetermined frequency, as the heating energy applied to the Peltier element, to the Peltier element. The predetermined frequency of the AC power at this time is set to a frequency different from the fluctuating frequency of the heat flow flowing from the heat source to the thermal conduction path.

Then, after calculating the difference between the first temperature affected by heat generation by the heating element and the second temperature not affected by heat generation by the heating element, the data of the frequency component of the above-described predetermined frequency is extracted from the calculation result. Based on the temperature difference data extracted as described above and the AC power applied to the Peltier element, the thermal conductance of the heat source is calculated. That is, by applying a modulating power at a frequency different from the fluctuating frequency of the heat flow from the heat source to the Peltier element, and extracting and utilizing the data of the frequency component of the modulation frequency, a fluctuation component and the like of the heat flow are eliminated to calculate the thermal conductance. As a result, the thermal conductance is calculated more accurately.

(3) The thermal conductance measuring method according to the above (1) or (2), comprising when calculating the thermal conductance of the heat source, further calculating a total thermal resistance from the heat source to the thermal conduction path based on the difference between the first temperature and the second temperature and the heating energy when the first temperature was measured, and calculating a thermal resistance inside the heat source based on the total thermal resistance.

The thermal conductance measuring method according to this item includes further measuring the thermal resistance inside the heat source, in addition to the thermal conductance of the heat source. As mentioned in the above item (1), the thermal resistance obtained from the temperature change data (the difference between the first temperature and the second temperature) and the heating energy (the heating energy when the first temperature was measured) is the total thermal resistance including all the thermal resistances from the heat source to the thermal conduction path. That is, this total thermal resistance includes the thermal resistance inside the heat source for which information, such as specific heat, pressure, and the density of physical properties, is unknown, the thermal resistance at the heat-receiving part of the thermal conduction path formed from a material with known properties, such as thermal conductivity, and likewise the thermal resistance of the thermal conduction part of the thermal conduction path. In view of this, the thermal resistance inside the heat source is calculated based on the total thermal resistance as described above and the thermal resistances of the thermal conduction path, which are grasped because the thermal conduction path is formed from a material with a known thermal conductivity and the like. As a result, even if the information on the inside of the heat source is unknown, the thermal resistance is grasped as the information on the inside of the heat source from the calculated total thermal resistance and the known thermal resistance information.

(4) A system measuring thermal conductance of a heat source comprising: a thermal conduction modulation unit having a configuration in which a heating element is sandwiched by two thermal conduction media formed from a material with a known thermal conductivity, the heating element being controllable to fluctuate a heat generation amount, the thermal conduction modulation unit being installed to conduct heat from the heat source to one thermal conduction medium of the two thermal conduction media; a cooling source having a lower temperature than the heat source, the cooling source being installed to conduct heat from the other thermal conduction medium of the two thermal conduction media; a heating element control unit that controls the heating element by applying fluctuating heating energy to the heating element; a temperature measurement unit that measures a temperature at a temperature measurement point set at a predetermined position in both or any one of the two thermal conduction media; and a calculation processing unit that performs calculation processing. The calculating processing unit: calculates a difference between a first temperature affected by heat generation by the heating element and a second temperature not affected by heat generation by the heating element, from a measurement result of the temperature measurement unit; and calculates the thermal conductance of the heat source based on the difference and the heating energy when the first temperature was measured.

The thermal conductance measuring system according to this item measures the thermal conductance at a heat-receiving surface per unit area that can be extracted from the heat source having unused thermal energy. It includes a thermal conduction modulation unit, a cooling source, a heating element control unit, a temperature measurement unit, and a calculation processing unit. The thermal conduction modulation unit has a configuration in which a heating element is sandwiched by two thermal conduction media. The heating element is controllable to fluctuate its heat generation amount, and the two thermal conduction media are formed from a material with a known thermal conductivity. The thermal conduction modulation unit with such a configuration is installed so as to conduct heat from the heat source to be measured to one thermal conduction medium of the two thermal conduction media. The cooling source has a lower temperature than the heat source to be measured and is installed so as to conduct heat from the other thermal conduction medium of the two thermal conduction media. That is, the thermal conduction modulation unit and the cooling source are installed as a part of the thermal conduction path that diverts heat from the heat source so that heat flows from the heat source toward the cooling source.

The heating element control unit controls the heating element possessed by the thermal conduction modulation unit, and by applying fluctuating heating energy to the heating element, it controls the heating element to fluctuate the amount of heat generated from the heating element. The temperature measurement unit measures the temperature at a temperature measurement point, and the temperature measurement point is set at a predetermined position in both or any one of the two thermal conduction media possessed by the thermal conduction modulation unit. The calculation processing unit performs various calculation processes in this system, and as part of them, it performs the following operation. That is, the calculation processing unit acquires the first temperature affected by heat generation by the heating element and the second temperature not affected by heat generation by the heating element, from the measurement result at the temperature measurement point by the temperature measurement unit as described in the above item (1). Then, by calculating the difference between them, temperature change data that has changed due to the effect of the fluctuating heat generation of the heating element is extracted.

Furthermore, based on the extracted temperature change data and the heating energy applied to the heating element from the heating element control unit when the first temperature was measured by the temperature measurement unit, the calculation processing unit calculates the thermal conductance of the heat source to be measured as described in the above item (1). Accordingly, the thermal conductance at the heat-receiving surface that can be extracted from the heat source is calculated, without the need to grasp the specific heat, mass, or the like of the heat source. Moreover, according to the structure, heat is diverted from the heat source to be measured through the thermal conduction path including the thermal conduction modulation unit and the cooling source, and temperature is measured at the thermal conduction modulation unit in the thermal conduction path. Therefore, the measurement of heat sources in various environments, including heat sources through which corrosive gases, gas-liquid mixtures with medium density fluctuations, and the like flow, is covered. Furthermore, there is no need to consider durability against corrosion and the like, and durability and reliability are greatly improved.

(5) In the thermal conductance measuring system according to the above (4), the heating element is a Peltier element, the heating element control unit applies an AC power at a predetermined frequency different from a fluctuating frequency of a heat flow from the heat source as the heating energy, and the calculation processing unit extracts data of a frequency component of the predetermined frequency from a calculation result of the difference between the first temperature and the second temperature, and calculates the thermal conductance of the heat source based on the extraction result.

In the thermal conductance measuring system according to this item, the heating element possessed by the thermal conduction modulation unit is a Peltier element, and the heating energy applied to this Peltier element by the heating element control unit is an AC power at a predetermined frequency, thereby alternatingly fluctuating the amount of heat generated from the Peltier element. The predetermined frequency of the AC power at this time is set to a frequency different from the fluctuating frequency of the heat flow flowing from the heat source to the thermal conduction modulation unit and the like.

Then, after calculating the difference between the first temperature affected by heat generation by the heating element and the second temperature not affected by heat generation by the heating element, the calculation processing unit extracts the data of the frequency component of the above-described predetermined frequency from the calculation result. Furthermore, based on the temperature difference data extracted as described above and the AC power applied to the Peltier element from the heating element control unit, the calculation processing unit calculates the thermal conductance of the heat source. That is, as also mentioned in the above item (2), by applying a modulating power at a frequency different from the fluctuating frequency of the heat flow from the heat source to the Peltier element, and extracting and utilizing the data of the frequency component of the modulation frequency, a fluctuation component and the like of the heat flow are eliminated to calculate the thermal conductance. As a result, the thermal conductance is calculated more accurately.

(6) In the thermal conductance measuring system according to the above (4), in the one thermal conduction medium, at least three of the temperature measurement points are set at intervals along a conduction direction of heat from the heat source, and the calculation processing unit determines whether or not the heat flow from the heat source is in a steady state by utilizing temperatures measured at the at least three temperature measurement points by the temperature measurement unit and an interval between the at least three temperature measurement points, and calculates the thermal conductance of the heat source when the heat flow has been determined to be in a steady state.

In the thermal conductance measuring system according to this item, at least three temperature measurement points are set in one thermal conduction medium to be arranged on the heat source side, of the two thermal conduction media of the thermal conduction modulation unit. At least these three temperature measurement points are set at intervals along a conduction direction of heat flowing from the heat source in the one thermal conduction medium.

Then, the calculation processing unit determines whether or not the heat flow from the heat source is in a steady state by utilizing the temperatures measured at at least those three temperature measurement points by the temperature measurement unit and the intervals between at least those three temperature measurement points. That is, as long as the heat flow from the heat source is in a steady state rather than a transient state, the temperatures measured at all of at least the three temperature measurement points set in the one thermal conduction medium are considered to decrease linearly from the heat source side according to the intervals between the temperature measurement points. For example, when there are three temperature measurement points that are set at equal intervals, as long as the heat flow from the heat source is in a steady state, the difference between the temperatures at the temperature measurement point on the heat source side and at the temperature measurement point at the center is considered to be approximately equal to the difference between the temperatures at the temperature measurement point at the center and at the temperature measurement point on the cooling source side. In view of this, the calculation processing unit utilizes such a relationship to determine whether or not the heat flow from the heat source is in a steady state, and calculates the thermal conductance when it determines that it is in a steady state. This avoids measuring thermal conductance even though the heat flow from the heat source is in a transient state, and the thermal conductance is measured only when the heat flow is in a steady state. Therefore, the reliability of the measurement of thermal conductance is improved.

(7) In the thermal conductance measuring system according to the above (4), at least one of the temperature measurement points is set in the one thermal conduction medium, and at least one of the temperature measurement points is set in the other thermal conduction medium, and the calculation processing unit determines whether or not an amount of heat passing through the thermal conduction modulation unit is normal, from a magnitude relationship between a temperature measured at the temperature measurement point in the one thermal conduction medium by the temperature measurement unit and a temperature measured at the temperature measurement point in the other thermal conduction medium, and calculates the thermal conductance of the heat source when the heat flow has been determined to be normal.

In the thermal conductance measuring system according to this item, at least one temperature measurement point is set in one thermal conduction medium to be arranged on the heat source side, of the two thermal conduction media of the thermal conduction modulation unit, and at least one temperature measurement point is set in the other thermal conduction medium to be arranged on the cooling source side. The calculation processing unit determines whether or not the amount of heat passing through the thermal conduction modulation unit is normal, from the magnitude relationship between the temperatures measured at the temperature measurement points in the one thermal conduction medium by the temperature measurement unit and the temperature measured at the temperature measurement point in the other thermal conduction medium.

That is, if the amount of heat passing through the thermal conduction modulation unit is normal, the temperatures measured at the temperature measurement points in the one thermal conduction medium on the heat source side will be greater than the temperature measured at the temperature measurement point in the other thermal conduction medium on the cooling source side. In contrast to this, if the amount of passing heat flowing from the heat source is not sufficient or the effect of the heating element is transient, it is assumed that the temperature measured at the temperature measurement point in the other thermal conduction medium on the cooling source side will be greater than the temperatures measured at the temperature measurement points in the one thermal conduction medium on the heat source side. Such a temperature magnitude relationship is also applied to the one between a temperature measurement point close to the heat source and a temperature measurement point close to the cooling source, in a case where a plurality of temperature measurement points are set in each of the one thermal conduction medium and the other thermal conduction medium. In view of this, the calculation processing unit utilizes this relationship to determine whether or not the amount of heat passing through the thermal conduction modulation unit is normal, and calculates the thermal conductance when it determines that it is normal. This avoids measuring thermal conductance even though the amount of heat passing through the thermal conduction modulation unit is abnormal, and the thermal conductance is measured only when the amount of heat passing through is normal. Therefore, the reliability of the measurement of thermal conductance is improved.

(8) In the thermal conductance measuring system according to any one of the above (4) to (7), when calculating the thermal conductance of the heat source, the calculation processing unit further calculates a total thermal resistance from the heat source to the thermal conduction path based on the difference between the first temperature and the second temperature and the heating energy when the first temperature was measured, and calculates a thermal resistance inside the heat source based on the total thermal resistance.

In the thermal conductance measuring system according to this item, the calculation processing unit further calculates the thermal resistance inside the heat source, in addition to the thermal conductance of the heat source. That is, as mentioned in the above items (1) and (3), the total thermal resistance obtained from the temperature change data and the heating energy includes the thermal resistance inside the heat source, the thermal resistance at the heat-receiving part of the thermal conduction path, and the thermal resistance at the thermal conduction part of the thermal conduction path. In view of this, utilizing this, the calculation processing unit calculates the thermal resistance inside the heat source based on the total thermal resistance as described above and the thermal resistances of the thermal conduction path, which are grasped because the thermal conduction path is formed from a material with a known thermal conductivity and the like. As a result, even if the information on the inside of the heat source is unknown, the thermal resistance inside the heat source is grasped.

EFFECTS OF THE INVENTION

Since the present invention is thus configured, it is possible to grasp the thermal conductance of a heat source to contribute to the effective utilization of unused thermal energy.

BRIEF DESCRIPTION OF THE DRAWINGS

Fig. 1 is a block diagram illustrating an exemplary configuration of a thermal conductance measuring system according to an embodiment of the present invention.

Fig. 2 is a conceptual drawing illustrating an installation example of a thermal conduction path used in the thermal conductance measuring system according to the embodiment of the present invention, together with a model of thermal resistance from a heat source to the thermal conduction path.

Fig. 3 illustrates an exemplary structure of a thermal conduction modulation unit used in the thermal conductance measuring system according to the embodiment of the present invention. Fig. 3(a) is a top view, Fig. 3(b) is a side view, Fig. 3(c) is a bottom view, and Fig. 3(d) is a cross-sectional view when viewed from an arrow direction A-A in Fig. 3(b).

Fig. 4 is a flowchart illustrating an exemplary procedure of a thermal conductance measuring method according to the embodiment of the present invention.

Fig. 5(a) is a schematic diagram illustrating a relationship between heat amount and temperature, and Fig. 5(b) is an excerpt diagram illustrating thermal conductance in the schematic diagram of Fig. 5(a).

DESCRIPTION OF PREFERRED EMBODIMENTS

The following describes embodiments of the present invention based on the drawings. Here, identical or corresponding parts throughout the drawings are indicated with the same reference numerals. In addition, detailed descriptions of parts that are identical or corresponding to the prior art are omitted.

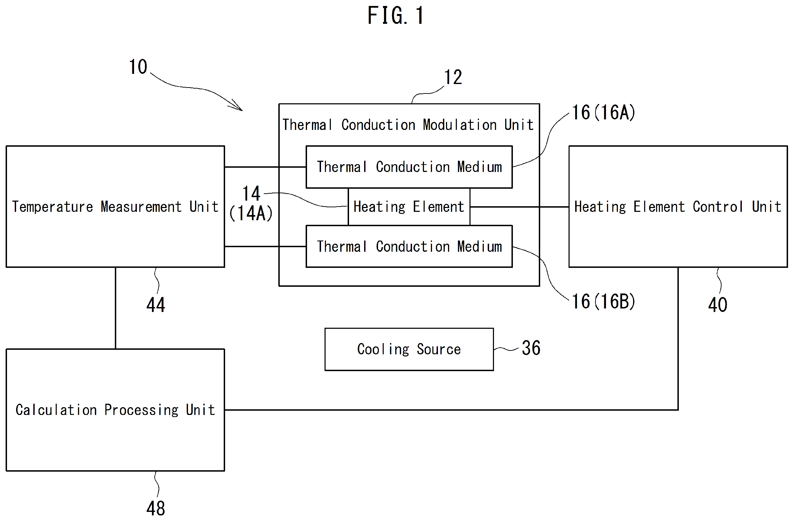

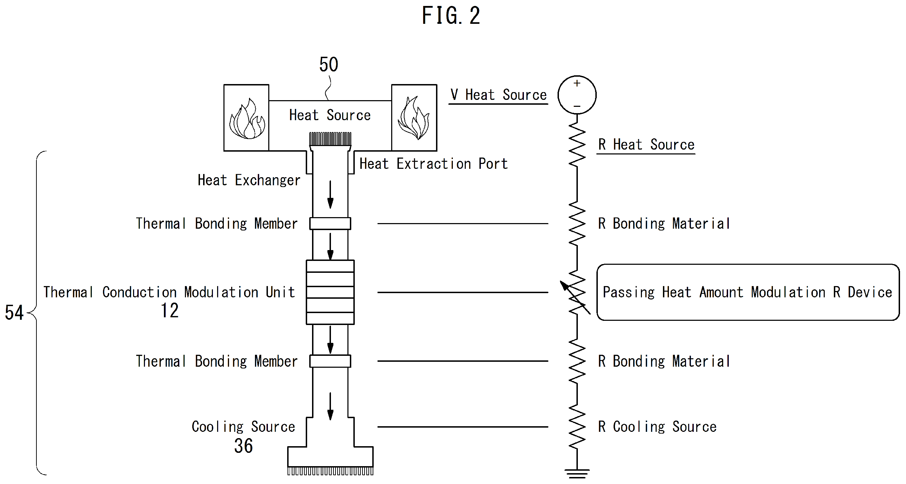

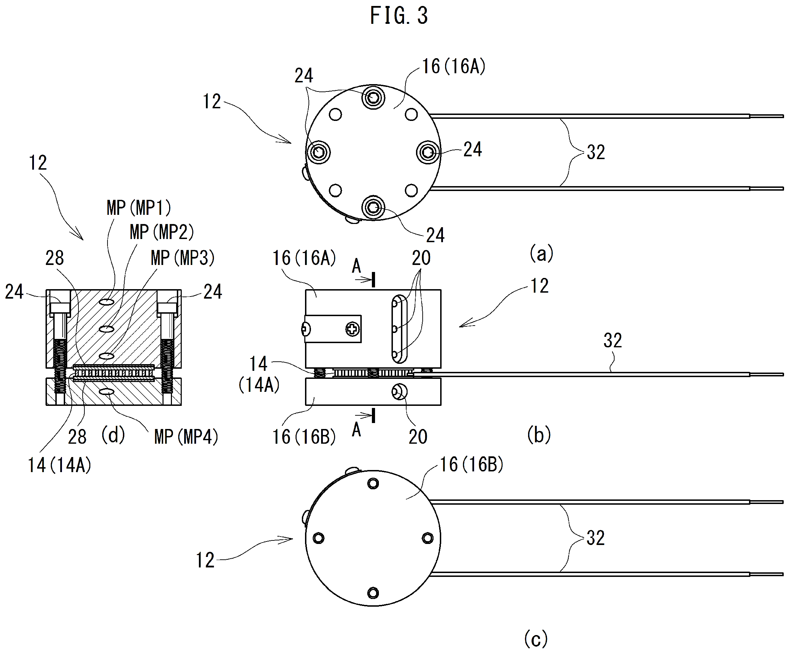

Fig. 1 illustrates an exemplary configuration of a thermal conductance measuring system 10 according to an embodiment of the present invention, for measuring thermal conductance at a heat-receiving surface that can be extracted from a heat source 50 to be measured (see Fig. 2) and measuring a thermal resistance inside the heat source 50. As illustrated, the thermal conductance measuring system 10 includes a thermal conduction modulation unit 12, a cooling source 36, a heating element control unit 40, a temperature measurement unit 44, and a calculation processing unit 48. The thermal conduction modulation unit 12 includes a heating element 14 and two thermal conduction media 16, and Fig. 3 illustrates an exemplary detailed structure of the thermal conduction modulation unit 12.

As illustrated in Fig. 3, the thermal conduction modulation unit 12 has a configuration in which the heating element 14 is sandwiched by the two thermal conduction media 16. In this embodiment, the two thermal conduction media 16 forming a columnar shape are connected with four bolts 24, and the heating element 14 is arranged between them. The heating element 14 is configured to fluctuate a heat generation amount in response to fluctuating heating energy. In this embodiment, the heating element 14 is formed of a Peltier element 14A, and control lines 32 for supplying electric power as heating energy to the Peltier element 14A are connected thereto. As can be seen in Fig. 3(d), heat dissipation sheets 28 are installed between the Peltier element 14A and the two thermal conduction media 16, and they enhance the conductivity of heat. Hollows for arranging the heat dissipation sheets 28 and a part of the Peltier element 14A are provided on surfaces facing one another of the two thermal conduction media 16.

The two thermal conduction media 16 are formed, for example, from a material with a known thermal conductivity, such as, but not limited to, aluminum or copper. In addition, of the two thermal conduction media 16, one thermal conduction medium 16A has three measurement holes 20 drilled. In this embodiment, these three measurement holes 20 extend toward a center of the thermal conduction medium 16A at positions equally spaced from one another in a vertical direction of Figs. 3(b) and 3(d). The thermal conduction medium 16A forms a circular shape in a planar view such as Fig. 3(a). In the three measurement holes 20, temperature measurement points MP1 to MP3 are set at positions near the center of the thermal conduction medium 16A with a circular shape in the planar view. Accordingly, the intervals in the vertical direction of Fig. 3(d) between the three temperature measurement points MP1 to MP3 are equal.

In contrast to this, of the two thermal conduction media 16, another thermal conduction medium 16B has one measurement hole 20 drilled. The one measurement hole 20 extends toward a center of the thermal conduction medium 16B forming a circular shape in a bottom view, such as Fig. 3(c). In the measurement hole 20 of the thermal conduction medium 16B, a temperature measurement point MP4 is also set at a position near the center of the thermal conduction medium 16B with a circular shape in the bottom view. That is, the temperature measurement points MP1 to MP4 are set in the vicinity of the heating element 14 in a positional relationship of sandwiching the heating element 14. Due to the number of the measurement holes 20 and the number of the temperature measurement points MP as described above, the one thermal conduction medium 16A has a greater width in the vertical direction of Figs. 3(b) and 3(d) than the other thermal conduction medium 16B.

As illustrated in Fig. 2, the thermal conduction modulation unit 12 configured as described above is utilized as part of a thermal conduction path 54 installed so as to divert heat from the heat source 50 to be measured. In the embodiment of Fig. 2, a heat exchanger is installed via a heat extraction port from the heat source 50, and further, the thermal conduction modulation unit 12 is installed there via a thermal bonding member. At this time, the thermal conduction modulation unit 12 is installed so that heat from the heat source 50 is conducted to the one thermal conduction medium 16A, in other words, the one thermal conduction medium 16A is arranged on an upper side in Fig. 2. Accordingly, in the thermal conduction modulation unit 12, heat is conducted from the upper side to a lower side in Figs. 3(b) and 3(d). The cooling source 36 illustrated also in Fig. 1 is connected to the other thermal conduction medium 16B of the thermal conduction modulation unit 12 via a thermal bonding member. The other thermal conduction medium 16B is arranged at the lower side of Fig. 2.

The cooling source 36 has a lower temperature than the heat source 50 to be measured, thereby generating a heat flow in which the heat diverted from the heat source 50 flows toward the cooling source 36. Accordingly, a model evaluation circuit from a V heat source to GND via a plurality of R resistors is illustrated on the right side of Fig. 2. The model evaluation circuit models the flow of heat as the flow of electricity. As can be seen from this circuit, each member constituting the thermal conduction path 54 through which heat flows has a thermal resistance, and the thermal conductivity and the like of the material constituting each member, except for the heat source 50, is known. Thus, their thermal resistances are grasped.

Here, the heat source 50 to be measured as illustrated in Fig. 2 may be any heat source as long as it contains unused thermal energy. Examples of the heat source 50 include, but are not limited to, facilities in industrial plants that handle thermal energy, various devices using heat sources, combustion devices, internal combustion engines, incinerators, flow passages through which hot spring water flows, exhaust ducts, chimneys, steam piping, and the like.

Referring again to FIG. 1, the heating element control unit 40 controls the heating element 14 by applying fluctuating heating energy to the heating element 14 of the thermal conduction modulation unit 12. In this embodiment, an AC power (modulating power) at a predetermined frequency is supplied to the Peltier element 14A as heating energy through the control lines 32 as illustrated in Fig. 3. The predetermined frequency of the AC power at this time is set to a frequency different from a fluctuating frequency of the heat flow from the heat source 50, which is grasped in advance. The temperature measurement unit 44 measures temperatures at the temperature measurement points MP set as described above in the thermal conduction media 16 of the thermal conduction modulation unit 12. The temperature measurement unit 44 of this embodiment is configured, for example, to acquire temperatures at the temperature measurement points MP through platinum Pt100 as a resistance temperature detector or a thermocouple, and to measure them at high speed over a wide temperature range, but it is not limited to this. The calculation processing unit 48 performs various operation processes in the thermal conductance measuring system 10. The details of part of the calculation processing performed by the calculation processing unit 48 are described below.

Here, the thermal conductance measuring system 10 according to the embodiment of the present invention is not limited to the configuration illustrated in Fig. 1 to Fig. 3 and may have a configuration in which some of the configuration units illustrated in Fig. 1 to Fig. 3 are deleted or replaced, or a configuration in which a new configuration unit is added. Furthermore, each configuration unit in Fig. 1 represents a unit into which the configuration of the thermal conductance measuring system 10 is functionally divided, and does not directly represent each device constituting the thermal conductance measuring system 10. It is composed of various hardware, software, or a combination of them. For example, the heating element 14 may be composed of anything other than the Peltier element 14A as long as it can be controlled so that the heat generation amount fluctuates. In addition, the thermal conduction path 54 may be different from the configuration in Fig. 2 as long as it includes the thermal conduction modulation unit 12 and the cooling source 36. Furthermore, in the thermal conduction modulation unit 12, the shape and quantity of each member may be different from those of the embodiment of Fig. 3, and the quantity and positions of the temperature measurement points MP may be set appropriately.

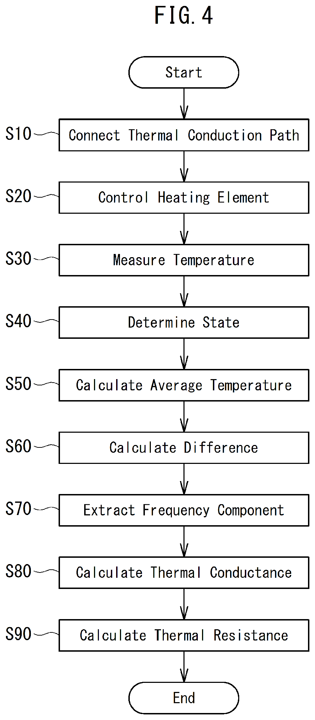

Subsequently, a description will be given of a thermal conductance measuring method according to the embodiment of the present invention with reference to Fig. 4. The thermal conductance measuring method is performed using the thermal conductance measuring system 10 described above. For the configuration of the thermal conductance measuring system 10, refer to Fig. 1 to Fig. 3 as appropriate. The flowchart illustrated in Fig. 4 illustrates an exemplary procedure flow of the thermal conductance measuring method, and the procedure of the thermal conductance measuring method is not limited to this flowchart. For this reason, some of the steps illustrated in Fig. 4 may be changed, deleted, or reordered, and new steps may be added.

S10 (Connection of thermal conduction path): For example, as illustrated in Fig. 2, the other end of the thermal conduction path 54 is connected to the heat source 50 to be measured. The thermal conduction path 54 has a cooling source 36 at one end and a thermal conduction modulation unit 12 at a middle part. At the same time, other constituting members of the thermal conductance measuring system 10 are installed and connected. For example, heat acquisition parts of the temperature measurement unit 44 are installed at the temperature measurement points MP set in the thermal conduction media 16 of the thermal conduction modulation unit 12.

S20 (Heating element control): The heating element control unit 40 starts controlling the heating element 14 of the thermal conduction modulation unit 12. That is, in this embodiment, the Peltier element 14A is supplied with an AC power having a predetermined frequency (modulation frequency) different from the fluctuating frequency of the heat flow from the heat source 50 so that, for example, a current waveform becomes a sinusoidal wave.

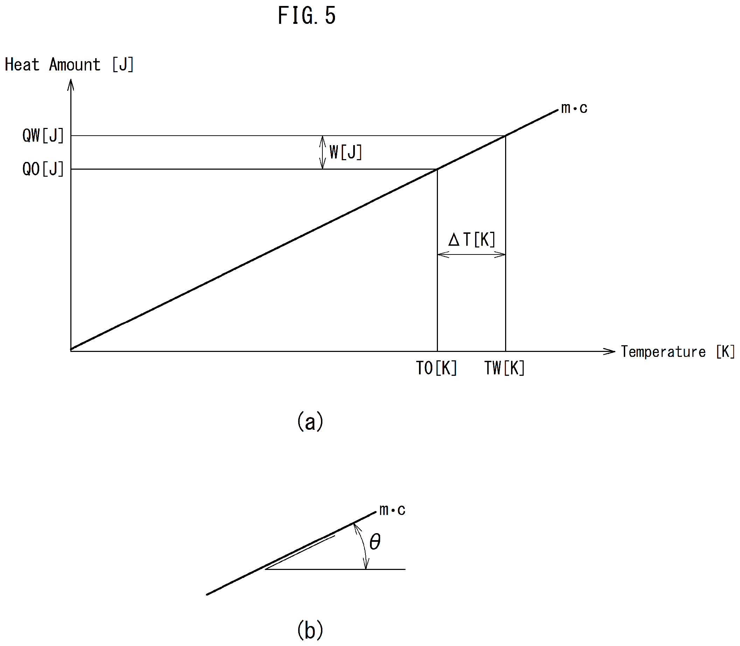

S30 (Temperature measurement): The temperature measurement unit 44 measures temperature at the temperature measurement points MP set in the thermal conduction media 16. Specifically, temperature is measured at the temperature measurement points MP1 to MP3 set in the one thermal conduction medium 16A of the thermal conduction modulation unit 12 and at the temperature measurement point MP4 set in the other thermal conduction medium 16B. At this time, the measurement is performed at a sampling interval at least twice the modulation frequency of the AC power supplied from the heating element control unit 40 to the Peltier element 14A. Furthermore, for subsequent processing, the calculation processing unit 48 or an AD converter provided separately converts measured analog temperature data to digital temperature data. The AD conversion at this time is preferably performed at the highest possible resolution. The temperature measured in this step corresponds to a first temperature under an effect of heat generation by the heating element 14 (under modulation) (see reference numeral TW in Fig. 5(a)).

S40 (State determination): The calculation processing unit 48 determines whether or not the heat flow flowing from the heat source 50 is in a steady state and whether or not the amount of heat passing through the thermal conduction modulation unit 12 is normal. First, to describe the determination of the heat flow, the calculation processing unit 48 utilizes the temperatures measured at the three temperature measurement points MP1 to MP3 in the one thermal conduction medium 16A and the intervals between those three temperature measurement points MP1 to MP3 to determine the heat flow. Specifically, as long as the heat flow from the heat source 50 is in a steady state, the heat flow flowing from the heat source 50 side to the cooling source 36 side is assumed to decrease linearly. In view of this, in this embodiment in which the three temperature measurement points MP1 to MP3 are set at equal intervals, the difference between the temperatures at the temperature measurement point MP1 on the heat source 50 side in the thermal conduction medium 16A and at the temperature measurement point MP2 at the center is considered to be approximately equal to the difference between the temperatures at the temperature measurement point MP2 at the center in the thermal conduction medium 16A and at the temperature measurement point MP3 on the cooling source 36 side. In contrast to this, when the heat flow from the heat source 50 is in a transient state, the above relationship is broken, and an event occurs in which the value of the difference between the temperatures at the temperature measurement points MP1 and MP3 divided by 2 is not equal to the difference between the temperatures at the temperature measurement points MP1 and MP2 or the difference between the temperatures at the temperature measurement points MP2 and MP3. Utilizing these, the calculation processing unit 48 determines whether or not the heat flow flowing from the heat source 50 is in a steady state. Even if four or more temperature measurement points MP are set in the one thermal conduction medium 16A, it is only necessary to utilize the relationship as described above to determine the heat flow.

Next, to describe the determination of the heat amount, the calculation processing unit 48 utilizes a magnitude relationship between the temperatures measured at the three temperature measurement points MP1 to MP3 in the one thermal conduction medium 16A and the temperature measured at the temperature measurement point MP4 in the other thermal conduction medium 16B to determine the heat amount. Specifically, if the amount of heat passing through the thermal conduction modulation unit 12 is normal, the temperature is assumed to gradually decrease from the heat source 50 side toward the cooling source 36 side. In view of this, in this embodiment, the temperatures measured at the temperature measurement points MP1, MP2, MP3, MP4, which are aligned along a temperature transfer direction from the heat source 50 side to the cooling source 36 side, are considered to be in descending order in this listing order.

In contrast to this, if the heat amount is abnormal for reasons such as excessive modulation by the heating element 14 (Peltier element 14A), the above relationship is broken. For example, an event occurs in which the temperatures at the temperature measurement points MP1 to MP3 become approximately equal, or those temperatures become smaller than the temperature at the temperature measurement point MP4. Utilizing these, the calculation processing unit 48 determines whether or not the amount of heat passing through the thermal conduction modulation unit 12 is normal. Even if two or fewer or four or more temperature measurement points MP are set in the one thermal conduction medium 16A, or even if two or more temperature measurement points MP are set in the other thermal conduction medium 16B, it is only necessary to utilize the relationship as described above to determine the heat amount.

In this step S40, when it is determined that the heat flow from the heat source 50 is in a steady state, and the amount of heat passing through the thermal conduction modulation unit 12 is normal, the processing moves to the next step. If the transient state of the heat flow or an abnormality of the heat amount is detected, the configuration of the thermal conduction path 54, measurement timing, the AC power supplied to the Peltier element 14A, and the like are reviewed.

S50 (Average temperature calculation): The calculation processing unit 48 calculates the average temperature of the temperatures measured in S30 above. That is, in this embodiment, since an AC power is applied to the Peltier element 14A to fluctuate the heat generation amount, the effect of temperature fluctuation (modulation) by the Peltier element 14A causes a temperature change that fluctuates alternatingly up and down. Therefore, by calculating the average temperature using, for example, a moving average, temperature data that eliminates the effect of the temperature fluctuation by the Peltier element 14A is extracted. At this time, the processing is performed using, for example, a low-pass filter whose filter characteristics are set so as not to fluctuate the component that fluctuates due to the modulation. The average temperature calculation is performed at each temperature measurement point MP, or only at a specific temperature measurement point MP, and subsequent processing is performed using the data at the temperature measurement points MP where the average temperature has been calculated in this step. The temperature calculated in this step corresponds to a second temperature not affected by heat generation by the heating element 14 (in an unmodulated state) (see reference numeral T0 in Fig. 5(a)).

S60 (Difference calculation): The calculation processing unit 48 calculates the difference between the temperature measured in the above S30 (the first temperature) and the average temperature calculated in the above S50 (the second temperature). As a result, temperature change data that has changed due to the effect of the temperature fluctuation (modulation) by the Peltier element 14A (see reference numeral $\Delta T$ in Fig. 5(a)) is extracted.

S70 (Frequency component extraction): The calculation processing unit 48 extracts frequency component data of the frequency (modulation frequency) of the AC power applied to the Peltier element 14A from the temperature change data calculated in the above S60. This eliminates noise such as fluctuation components of the heat flow from the heat source 50. Examples of the extraction method here include, for example, a method of extracting only the vicinity of the modulation frequency using a low-pass filter, a method of extracting using a band-pass filter centered on the modulation frequency, a method of performing synchronous detection (baseband detection), and a method of performing baseband detection and two-stage shift detection using a PSN modulator in multiple stages, but the detailed explanation is omitted here.

S80 (Thermal conductance calculation): The calculation processing unit 48 calculates the thermal conductance of the heat source 50 to be measured. Here, Fig. 5(a) schematically illustrates the relationship between heat amount (in units of J) and temperature (in units of K), where reference numeral $m$ is the mass of the heat source 50, reference numeral c is the specific heat of the heat source 50, reference numeral TW is the temperature in the modulated state (first temperature), reference numeral T0 is the temperature in the unmodulated state (second temperature), reference numeral Q0 is the original heat amount of the heat source 50, and reference numeral QW is the heat amount taking into consideration the heat generation by the heating element 14. That is, since the heat amount is proportional to the temperature, with the mass $m$ and the specific heat c as constants, in a region undergoing a small temperature change in which there is no phase change, the relationship is as illustrated in Fig. 5(a) and expressed by the following formulas.

$$Q0 \ (J) = m \cdot c \cdot T0 \ (K)$$

$$QW \ (J) = m \cdot c \cdot TW \ (K)$$

Fig. 5(a) also illustrates the relationship of the following formula, where reference numeral W is the heating energy applied to the Peltier element 14A during modulation (in unites of J) and reference numeral $\Delta T$ is the difference between the temperature TW in the modulated state and the temperature T0 in the unmodulated state, and illustrates that heating energy W is added to increase the temperature by $\Delta T$.

$$QW \ (J) = Q0 \ (J) + W \ (J)$$

From the relationships described above, the following formula holds.

$$m \cdot c = Q0 \ (J)/T0 \ (K)$$

$$= QW \ (J)/TW \ (K)$$

Furthermore, for the temperature change $\Delta T$ caused by the response to the heating energy W, the following formula holds.

$$m \cdot c = W \ (J) \ /\Delta T \ (K)$$

From these formulas, the following relationships hold.

$$Q0 \ (J)/T0 \ (K) = W \ (J)/\Delta T \ (K)$$

$$Q0 \ (J) = T0 \ (K)/\Delta T \ (K) \cdot W \ (J)$$

However, since the formulas do not include the ratio of each thermal resistance inside the thermal conduction path 54 illustrated in Fig. 2, it is necessary to take into account a modulation efficiency. Furthermore, since the heating energy W applied to the Peltier element 14A during modulation is actually a modulating power (AC power), the following formula holds, where the modulating power is denoted as reference numeral P (in units of W), and the modulation efficiency is denoted as reference numeral $\eta$, taking into account the conversion between the heating energy W (J) and the modulating power P (W).

$$Q0 \text{ (J)} = T0 \text{ (K)}/\Delta T \text{ (K)} \cdot P \text{ (W)} \cdot \eta \text{ (\%)}$$

This formula shows that the amount of heat possessed by the heat source 50 can be estimated using only the temperature information that varies by modulation. If the modulating power P and the modulation efficiency $\eta$ are values specific to the thermal conductance measuring system 10, only the thermal resistance of the heat source 50 is unknown. Therefore, it shows that the thermal conductance of the heat source 50 can be estimated based on this formula.

Here, since thermal resistance is the value of the temperature difference between two points divided by the flow rate of heat flowing between the two points (the heat amount per unit time), it is expressed as the inclination of the graph represented by "m·c" in Fig. 5(a) (see reference numeral $\theta$ in Fig. 5(b)). Therefore, when the thermal resistance is denoted as reference numeral Rth, it can be calculated using the following formula.

$$Rth \text{ (°C/W)} = \Delta T \text{ (K)}/W \text{ (J)}$$

This thermal resistance Rth includes all the thermal resistances inside the thermal conduction path 54 illustrated on the right side of Fig. 2. Therefore, when an unknown thermal resistance of the heat source 50 is denoted as reference numeral Rrs, and a thermal resistance present in a measurement system is denoted as reference numeral Rse, the thermal resistance Rrs of the heat source 50 can be obtained as follows.

$$Rrs \text{ (°C/W)} = Rth \text{ (°C/W)} - Rse \text{ (°C/W)}$$

Furthermore, as a general unit, the thermal conductance that eliminates the heat-receiving area of the thermal conduction path 54 for the heat source 50 is expressed as the reciprocal of the thermal resistance. That is, "tan $\theta$" in Fig. 5(b) corresponds to the thermal conductance at the heat-receiving surface in contact with the heat source 50. The calculation processing unit 48 calculates the thermal conductance of the heat source 50 as described above. At this time, it is important to handle the heat amount value including the modulation efficiency $\eta$, and it should be noted that the modulating power P (W) shown here is a value specific to the measurement system. Since the heat amount is defined as the amount of heat per unit time, if the modulating power P is adjusted and can be converted to 1 (J), the value of $\Delta T$ can be used directly.

Therefore, by adjusting the ratio with the modulating power P well, the calculation formulas are more simplified, and the load on a microcomputer and the like constituting the calculation processing unit 48 is reduced more.

S90 (Thermal resistance calculation): The calculation processing unit 48 calculates the thermal resistance inside the heat source 50 to be measured. As mentioned in S80 above, the thermal resistance Rth (°C/W), which includes all the thermal resistances inside the thermal conduction path 54 illustrated on the right side of Fig. 2, can be obtained as a combined resistance value corresponding to the following formula.

$$Rth \text{ (°C/W)} =$$

$$(R \text{ heat source} + R \text{ bonding material} + R \text{ device}) \times (R \text{ device} + R \text{ bonding}$$

$$material + R \text{ cooling source})/$$

$$((R \text{ heat source} + R \text{ bonding material} + R \text{ device}) + (R \text{ device} + R \text{ bonding}$$

$$material + R \text{ cooling source}))$$

This is the thermal resistance obtained from the temperature measurement points MP, and Kirchhoff's first law and second law (Ohm's law), which are used in an electrical network, can be applied to the thermal resistance. This Rth is a parallel connection of series values of: a value for thermal resistors on the heat source side connected in series, that is, a total value of R heat source + a thermal resistance value for heat-source side R bonding material + heat-source side R device; and a total value of R cooling source + cooling-source side R bonding material + cooling-source side R device. This is a parallel resistance calculation formula for electrical circuits R1 and R2.

Rth can be calculated such that it can be calculated by $R = (R1 \times R2)/(R1 + R2)$. This is because the thermal resistance value for the modulation device, R device, which is added to both the heat source side and the cooling-source side, is shown as a common value here, although their proportions take device-specific values.

Then, among the thermal resistances that constitute the thermal resistance Rth described above, for all but the R heat source, the thermal conductivity or the like of each component material is known. Therefore, the thermal resistances are grasped. Therefore, the calculation processing unit 48 utilizes them to calculate the thermal resistance inside the heat source 50 (R heat source).

At this time, a heat flow is diverted to configure a heat flow circuit as illustrated in Fig. 2, after the thermal conductivity and shape dimensions of the heat exchanger connected to the heat source 50 and the thermal bonding member conducting heat from the heat exchanger are measured in advance. In that case, the unknown thermal resistance is only the thermal resistance inside the heat source 50. That is, the thermal resistance value inside the heat source 50 is calculated without obtaining the physical property values required for calculating thermal energy, such as the mass, specific heat, density, and pressure, of the materials that mediate thermal energy in the above-described devices, such as facilities in industrial plants, taken as an example of the heat source 50. In addition, the R cooling source, which is the thermal resistance value for the cooling source 36, can be treated as zero as much as possible when a function to keep the cooling-side temperature constant, such as a circulator, is used. Therefore, the calculation formulas are more simplified. Moreover, when the thermal conduction path 54 is configured so that the thermal bonding member connected to the heat exchanger on the heat source 50 side and the thermal bonding member connected to the cooling source 36 side have an identical shape and have the same thermal resistance value (R bonding material), the calculation is further simplified.

In addition, when grasping the thermal resistance that takes a known value, it is necessary to estimate the temperature of the V heat source based on the temperature information measured at the temperature measurement points MP, taking into account the properties of the heat exchanger and the thermal conduction modulation unit 12 that have temperature functions. That is, since the temperature at the heat extraction port to which the heat exchanger that becomes the V heat source is attached is not generally measured, work for estimating the thermal resistance of a known material with the above temperature properties from the temperature information at the temperature measurement points MP is added. In this estimation work, for example, the temperature information observed at the temperature measurement points MP1 to MP4 of the thermal conduction modulation unit 12 is implemented in an electrical circuit simulator using the electrical circuit as an equivalent model evaluation circuit illustrated on the right side of Fig. 2. Then, a simulation is performed to simulate a transient phenomenon in which the V heat source fluctuates from 0 volts to a predetermined voltage, and the observed changes at the temperature measurement points MP1 to MP4 and the temperature functions of the heat exchanger and the thermal conduction modulation unit 12 with a temperature coefficient are parametrically analyzed. Subsequently, a thermal resistance table or the like based on appropriate temperature functions is adopted from a method to match the temperature fluctuation observed at the temperature measurement points MP with the result of simulating the V heat source as a circuit power supply voltage using the circuit simulator. As a result, even when the temperature at the heat extraction port of the heat exchanger is not measured, the temperature change at the temperature measurement points MP1 to MP4 is used to calculate the thermal resistance inside the heat source 50, regardless of the temperature of the heat source 50.

According to the embodiment of the present invention that forms the above configuration, it is possible to obtain the following operational advantages. That is, the thermal conductance measuring method according to the embodiment of the present invention includes measuring the thermal conductance of the heat source 50 having unused thermal energy that has been exhausted by utilizing, for example, the system 10 as illustrated in Fig. 1 to Fig. 3. Specifically, by connecting the other end of the thermal conduction path 54 having the cooling source 36 at one end to the heat source 50, heat is diverted so as to flow from the heat source 50 toward the cooling source 36 (see S10 in Fig. 4). The thermal conduction path 54 used at this time is formed from a material whose properties, such as thermal conductivity, are grasped in advance. In addition, the heating element 14 is installed in the thermal conduction path 54, that is, between one end of the thermal conduction path 54, where the cooling source 36 is installed, and the other end of the thermal conduction path 54 connected to the heat source 50. As the heating element 14 to be installed, a heating element that is controllable to fluctuate the heat generation amount by applying fluctuating heating energy W to the heating element is used.

Furthermore, by measuring the temperature within the thermal conduction path 54 having the configuration as described above, the first temperature TW affected by heat generation by the heating element 14 and the second temperature T0 not affected by heat generation by the heating element 14 are acquired (see S30 and S50 in Fig. 4 and Fig. 5(a)). Subsequently, by calculating the difference $\Delta T$ between the acquired first temperature TW and the second temperature T0, temperature change data $\Delta T$ that has changed due to the effect of the fluctuating heat generation of the heating element 14 is extracted (see S60 in Fig. 4 and Fig. 5(a)). Then, the thermal conductance of the heat source 50 is calculated based on the extracted temperature change data $\Delta T$ and the heating energy W applied to the heating element 14 when the first temperature TW was measured.

That is, from the relationship illustrated in Fig. 5(a), "the product of mass and specific heat" m·c can be represented as the value of "the heat amount in a state where no heating energy is received" Q0 divided by "the temperature in the state where no heating energy is received (second temperature)" T0 or the value of "the heat amount in a state where heating energy is received" QW divided by "the temperature in the state where heating energy is received (first temperature)" TW. Furthermore, "the product of mass and specific heat" m·c can also be represented as the value of the heating energy W divided by the temperature change data $\Delta T$, provided that radiation and thermal conduction causing error are negligibly small.

Since thermal resistance is the value of the temperature difference between two points divided by the flow rate of heat flowing between the two points (the amount of heat flowing in unit time), it can be expressed as the value of the temperature change data $\Delta T$ divided by the heating energy W in the relationship as described above. It can be seen that considering that this thermal resistance includes all the thermal resistances from the heat source 50 to the thermal conduction path 54, and that the thermal conductance can be expressed as the reciprocal of the thermal resistance, as well as considering the heat-receiving area and the like of the thermal conduction path 54, the thermal conductance per unit area can be calculated from the temperature change data $\Delta T$ and the heating energy W (see S80 in Fig. 4). As a result, the thermal conductance of the heat source 50 can be calculated based on the temperature change data $\Delta T$ that has changed due to the effect of the heating element 14 and the heating energy W applied to the heating element 14 at that time, without the need to grasp the specific heat c, the mass *m,* and the like of the heat source 50. The thermal conductance can thus be grasped, therefore allowing it to contribute to the effective utilization of the unused thermal energy possessed by the heat source 50. Moreover, the thermal conductance can be grasped even when the information on the inside of the heat source 50, such as the specific heat c and pressure of the heat source 50, and the density of physical properties, is unknown, or when the pressure and density of the heat source 50 fluctuate over time.

In the thermal conductance measuring method according to the embodiment of the present invention, the Peltier element 14A is utilized as the heating element 14 installed in the thermal conduction path 54. In addition, the amount of heat generated from the Peltier element 14A is alternately fluctuated by applying the AC power (modulating power) P at a predetermined frequency, as the heating energy W applied to the Peltier element 14A, to the Peltier element 14A. The predetermined frequency of the AC power P at this time is set to a frequency different from the fluctuating frequency of the heat flow flowing from the heat source 50 to the thermal conduction path 54. Then, after calculating the difference $\Delta T$ between the first temperature TW affected by heat generation by the heating element 14 and the second temperature T0 not affected by heat generation by the heating element 14, the data of the frequency component of the above-described predetermined frequency is extracted from the calculation result (see S70 in Fig. 4). Based on the temperature difference data extracted as described above and the AC power P applied to the Peltier element 14A, the thermal conductance of the heat source 50 is calculated. That is, by applying the modulating power P at a frequency different from the fluctuating frequency of the heat flow from the heat source 50 to the Peltier element 14A, and extracting and utilizing the data of the frequency component of the modulation frequency, the thermal conductance can be calculated by eliminating a fluctuation component and the like of the heat flow. As a result, the thermal conductance can be calculated more accurately.

Additionally, the thermal conductance measuring method according to the embodiment of the present invention includes further measuring the thermal resistance inside the heat source 50, in addition to the thermal conductance of the heat source 50. As described above, the thermal resistance obtained from the temperature change data $\Delta T$ (the difference between the first temperature TW and the second temperature T0) and the heating energy W (the heating energy when the first temperature TW was measured) is the total thermal resistance including all the thermal resistances from the heat source 50 to the thermal conduction path 54. That is, this total thermal resistance includes the thermal resistance inside the heat source 50 for which information, such as specific heat, pressure, and the density of physical properties, is unknown, the thermal resistance at the heat-receiving part of the thermal conduction path 54 formed from a material with known properties, such as thermal conductivity, and likewise the thermal resistance of the thermal conduction part of the thermal conduction path 54. In view of this, the thermal resistance inside the heat source 50 can be calculated based on the total thermal resistance as described above and the thermal resistances of the thermal conduction path 54, which can be grasped because the thermal conduction path 54 is formed from a material with a known thermal conductivity and the like. As a result, even if the information on the inside of the heat source 50 is unknown, the thermal resistance can be grasped as the information on the inside of the heat source 50 from the calculated total thermal resistance and the known thermal resistance information.

Meanwhile, the thermal conductance measuring system 10 according to the embodiment of the present invention measures the thermal conductance at the heat-receiving surface per unit area that can be extracted from the heat source 50 having unused thermal energy. As illustrated in Fig. 1, it includes the thermal conduction modulation unit 12, the cooling source 36, the heating element control unit 40, the temperature measurement unit 44, and the calculation processing unit 48. As also illustrated in Fig. 3, the thermal conduction modulation unit 12 has a configuration in which the heating element 14 is sandwiched by the two thermal conduction media 16. The heating element 14 is controllable to fluctuate its heat generation amount, and the two thermal conduction media 16 are formed from a material with a known thermal conductivity. The thermal conduction modulation unit 12 with such a configuration is installed so as to conduct heat from the heat source 50 to be measured to the one thermal conduction medium 16A of the two thermal conduction media 16. The cooling source 36 has a lower temperature than the heat source 50 to be measured and is installed so as to conduct heat from the other thermal conduction medium 16B of the two thermal conduction media 16. That is, as illustrated in Fig. 2, the thermal conduction modulation unit 12 and the cooling source 36 are installed as a part of the thermal conduction path 54 that diverts heat from the heat source 50 so that heat flows from the heat source 50 toward the cooling source 36.

The heating element control unit 40 controls the heating element 14 possessed by the thermal conduction modulation unit 12, and by applying the fluctuating heating energy W to the heating element 14, it controls the heating element 14 to fluctuate the amount of heat generated from the heating element 14. The temperature measurement unit 44 measures the temperature at the temperature measurement point MP, and as illustrated in Fig. 3(d), the temperature measurement point MP is set at a predetermined position in both or any one of the two thermal conduction media 16A, 16B possessed by the thermal conduction modulation unit 12. The calculation processing unit 48 performs various calculation processes in this system 10, and as part of them, it performs the following operation. That is, the calculation processing unit 48 acquires the first temperature TW affected by heat generation by the heating element 14 and the second temperature T0 not affected by heat generation by the heating element 14 from the measurement result at the temperature measurement point MP by the temperature measurement unit 44 in the way mentioned in the thermal conductance measuring method. Then, by calculating the difference ΔT between them, the temperature change data ΔT that has changed due to the effect of the fluctuating heat generation of the heating element 14 is extracted.

Furthermore, based on the extracted temperature change data ΔT and the heating energy W applied to the heating element 14 from the heating element control unit 40 when the first temperature TW was measured by the temperature measurement unit 44, the calculation processing unit 48 calculates the thermal conductance of the heat source 50 to be measured in the way mentioned in the thermal conductance measuring method. Accordingly, the thermal conductance at the heat-receiving surface that can be extracted from the heat source 50 can be calculated, without the need to grasp the specific heat c, the mass *m*, or the like of the heat source 50. Moreover, according to the structure, heat is diverted from the heat source 50 to be measured through the thermal conduction path 54 including the thermal conduction modulation unit 12 and the cooling source 36, and temperature is measured at the thermal conduction modulation unit 12 in the thermal conduction path 54. Therefore, the measurement of the heat source 50 in various environments, including the heat source 50 through which corrosive gases, gas-liquid mixtures with medium density fluctuations, and the like flow, can be covered. Furthermore, there is no need to consider durability against corrosion and the like, and durability and reliability can be greatly improved.

In addition, in the thermal conductance measuring system 10 according to the embodiment of the present invention, the heating element 14 possessed by the thermal conduction modulation unit 12 is the Peltier element 14A, and the heating energy W applied to this Peltier element 14A by the heating element control unit 40 is the AC power P at a predetermined frequency, thereby alternately fluctuating the amount of heat generated from the Peltier element 14A. The predetermined frequency of the AC power P at this time is set to a frequency different from the fluctuating frequency of the heat flow flowing from the heat source 50 to the thermal conduction modulation unit 12 and the like. Then, after calculating the difference ΔT between the first temperature TW affected by heat generation by the heating element 14 and the second temperature T0 not affected by heat generation by the heating element 14, the calculation processing unit 48 extracts the data of the frequency component of the above-described predetermined frequency from the calculation result.

Furthermore, based on the temperature difference data ΔT extracted as described above and the AC power P applied to the Peltier element 14A from the heating element control unit 40, the calculation processing unit 48 calculates the thermal conductance of the heat source 50. That is, as also mentioned in the thermal conductance measuring method, by applying the modulating power P at a frequency different from the fluctuating frequency of the heat flow from the heat source 50 to the Peltier element 14A, and extracting and utilizing the data of the frequency component of the modulation frequency, the thermal conductance can be calculating by eliminating a fluctuation component and the like of the heat flow. As a result, the thermal conductance can be calculated more accurately.

Additionally, in the thermal conductance measuring system 10 according to the embodiment of the present invention, as illustrated in Fig. 3, the three temperature measurement points MP1 to MP3 are set in the one thermal conduction medium 16A to be arranged on the heat source 50 side, of the two thermal conduction media 16 of the thermal conduction modulation unit 12. These three temperature measurement points MP1 to MP3 are set at intervals along the conduction direction of heat flowing from the heat source 50 (the vertical direction in Fig. 3(d)) in the one thermal conduction medium 16A. Then, the calculation processing unit 48 determines whether or not the heat flow from the heat source 50 is in a steady state by utilizing the temperatures measured at those three temperature measurement points MP1 to MP3 by the temperature measurement unit 44 and the intervals between those three temperature measurement points MP1 to MP3 (see S40 in Fig. 4). That is, as long as the heat flow from the heat source 50 is in a steady state rather than a transient state, the temperatures measured at all of the three temperature measurement points MP1 to MP3 set in the one thermal conduction medium 16A are considered to decrease linearly from the heat source 50 side according to the intervals between the temperature measurement points MP1 to MP3.

For example, as the embodiment in Fig. 3, when the three temperature measurement points MP1 to MP3 are set at equal intervals, as long as the heat flow from the heat source 50 is in a steady state, the difference between the temperatures at the temperature measurement point MP1 on the heat source 50 side and at the temperature measurement point MP2 at the center is considered to be approximately equal to the difference between the temperatures at the temperature measurement point MP2 at the center and at the temperature measurement point MP3 on the cooling source 36 side. In view of this, the calculation processing unit 48 utilizes such a relationship to determine whether or not the heat flow from the heat source 50 is in a steady state, and calculates the thermal conductance when it determines that it is in a steady state. This can avoid measuring thermal conductance even though the heat flow from the heat source 50 is in a transient state, and the thermal conductance can be measured only when the heat flow is in a steady state. Therefore, the reliability of the measurement of thermal conductance can be improved.

Furthermore, in the thermal conductance measuring system 10 according to the embodiment of the present invention, the one temperature measurement point MP4 is set in the other thermal conduction medium 16B to be arranged on the cooling source 36 side, of the two thermal conduction media 16 of the thermal conduction modulation unit 12. The calculation processing unit 48 determines whether or not the amount of heat passing through the thermal conduction modulation unit 12 is normal, from the magnitude relationship between the temperatures measured at the temperature measurement points MP1 to MP3 in the one thermal conduction medium 16A by the temperature measurement unit 44 and the temperature measured at the temperature measurement point MP4 in the other thermal conduction medium 16B (see S40 in Fig. 4). That is, if the amount of heat passing through the thermal conduction modulation unit 12 is normal, the temperatures measured at the temperature measurement points MP1 to MP3 in the one thermal conduction medium 16A on the heat source 50 side will be greater than the temperature measured at the temperature measurement point MP4 in the other thermal conduction medium 16B on the cooling source 36 side.

In contrast to this, if the amount of passing heat flowing from the heat source 50 is not sufficient or the effect of the heating element 14 is transient, it is assumed that the temperature measured at the temperature measurement point MP4 in the other thermal conduction medium 16B on the cooling source 36 side will be greater than the temperatures measured at the temperature measurement points MP1 to MP3 in the one thermal conduction medium 16A on the heat source 50 side. Such a temperature magnitude relationship is also applied to the three temperature measurement points MP1 to MP3 set in the one thermal conduction medium 16A. In view of this, the calculation processing unit 48 utilizes this relationship to determine whether or not the amount of heat passing through the thermal conduction modulation unit 12 is normal, and calculates the thermal conductance when it determines that it is normal. This can avoid measuring thermal conductance even though the amount of heat passing through the thermal conduction modulation unit 12 is abnormal, and the thermal conductance can be measured only when the amount of heat passing through is normal. Therefore, the reliability of the measurement of thermal conductance can be improved.

In addition, in the thermal conductance measuring system 10 according to the embodiment of the present invention, the calculation processing unit 48 further calculates the thermal resistance inside the heat source 50, in addition to the thermal conductance of the heat source 50. That is, as mentioned in the thermal conductance measuring method according to the embodiment of the present invention, the total thermal resistance obtained from the temperature change data $\Delta T$ and the heating energy W includes the thermal resistance inside the heat source 50, the thermal resistance at the heat-receiving part of the thermal conduction path 54, and the thermal resistance at the thermal conduction part of the thermal conduction path 54. In view of this, utilizing this, the calculation processing unit 48 can calculate the thermal resistance inside the heat source 50 based on the total thermal resistance as described above and the thermal resistances of the thermal conduction path 54, which are grasped because the thermal conduction path 54 is formed from a material with a known thermal conductivity and the like. As a result, even if the information on the inside of the heat source 50 is unknown, the thermal resistance inside the heat source 50 can be grasped.

More specifically, the thermal conduction circuit illustrated in Fig. 2, which represents the total thermal resistance described above, is modeled as a thermal network, and further, the thermal network is generally modeled and expressed as an electrical network. For example, it is known that a model is created by replacing a thermal resistance with an electrical resistance, applying it to Kirchhoff s first law and second law, and the calculation is performed by replacing the equilibrium of heat amount at each contact point with Kirchhoff's first law. Using this calculation method, the thermal resistance at the heat-receiving part, the thermal resistance at the thermal conduction part, and, what is more, the thermal resistance of the thermal conduction modulation unit 12, and the thermal resistance on the cooling source 36 side can be grasped in advance. As a result, unknown thermal resistance is narrowed down only to the thermal resistance inside the heat source 50 viewed from the heat-receiving part. Therefore, by making full use of Kirchhoff's laws, an electronic circuit simulator that has been remarkably evolving recently, and its inverse analysis tool, it is possible to identify the unknown part, that is, to calculate the thermal resistance inside the heat source 50.

To go even further, the above-described thermal resistance can be regarded as a scalar quantity unique to the heat source 50 that can be understood as the instantaneous value at that time viewed from the thermal conductance measuring system 10. The fact that this scalar quantity in the heat source 50 can be accurately measured indicates that, when a plurality of the thermal conductance measuring systems 10 are installed along a path of the same heat source 50, thermal resistance values at measurement points with different positional information inside the heat source 50 can be accurately measured. In view of this, by further extending Kirchhoff s laws, the plurality of measurement points are set, for example, between two points at a certain distance, and the thermal resistance values inside the heat source 50 are grasped at the respective points. Then, a heat flow circuit equivalent to a Wheatstone bridge in an electrical circuit can be configured as a heat flow passage therebetween, and an unknown thermal resistance connecting between the two points in the Wheatstone bridge in the electrical circuit can also be obtained. Since this unknown thermal resistance indicates the internal thermal resistance connecting between the two points on the heat flow passage, it is possible to expand the range of application and measure a heat medium thermal resistance value between the installed heat flow passage.

Furthermore, by obtaining the internal thermal resistance value not only as a scalar quantity but also as a vector quantity and by capturing the frequency fluctuation, which occurs when a thermal fluctuation frequency propagates between two points, on the other end, the moving speed of the medium that generates the heat flux between these two points can also be grasped. By regarding the generation of the time difference of heat flow fluctuation between the two points as the temperature fluctuation therebetween, regarding the second temperature change described above as a frequency change, and capturing the phase change, it is possible to consider that the heat medium moving speed between these two points can be indirectly measured. Accordingly, the heat medium moving speed inside the heat source 50 can be calculated.

In addition, the fact that the thermal resistance value inside the heat source 50 can be accurately measured indicates that it is possible to grasp surplus heat of the heat source 50 as a recoverable heat amount when it is reused. That is, since it is possible to actually measure the thermal potential of the heat source 50, by setting the available temperature range, it is possible to construct a system that measures a reusable, so to speak, recoverable heat amount from the heat source 50 being measured.

DESCRIPTION OF REFERENCE SIGNS

| | |
|---|---|
| 10 | Thermal conductance measuring system |
| 12 | Thermal conduction modulation unit |
| 14 | Heating element |
| 14A | Peltier element |
| 16 (16A, 16B) | Thermal conduction medium |
| MP (MP1 to MP4) | Temperature measurement point |
| 36 | Cooling source |
| 40 | Heating element control unit |
| 44 | Temperature measurement unit |
| 48 | Calculation processing unit |
| 50 | Heat source |
| 54 | Thermal conduction path |
| W | Heating energy |
| P | AC power (modulating power) |
| TW | First temperature (temperature in a modulated state) |
| T0 | Second temperature (temperature in an unmodulated state) |
| ΔT | Difference between the first temperature and the second temperature (temperature change data) |

**Claims**

1. A method for measuring thermal conductance of a heat source, the thermal conductance measuring method comprising:

   connecting the other end of a thermal conduction path to the heat source, the thermal conduction path having a cooling source at one end;
   installing a heating element in the thermal conduction path, the heating element being controllable to fluctuate a heat generation amount by applying fluctuating heating energy to the heating element;
   measuring a temperature within the thermal conduction path and acquiring a first temperature affected by heat generation by the heating element and a second temperature not affected by heat generation by the heating element; and
   calculating the thermal conductance of the heat source based on a difference between the first temperature and the second temperature and the heating energy when the first temperature was measured.

2. The thermal conductance measuring method according to claim 1, comprising:

   utilizing a Peltier element as the heating element;
   applying an AC power at a predetermined frequency different from a fluctuating frequency of a heat flow from the heat source as the heating energy; and
   extracting data of a frequency component of the predetermined frequency from a calculation result of the difference between the first temperature and the second temperature, and calculating the thermal conductance of the heat source based on the extraction result.

3. The thermal conductance measuring method according to claim 1 or 2, comprising
   when calculating the thermal conductance of the heat source, further calculating a total thermal resistance from the heat source to the thermal conduction path based on the difference between the first temperature and the second temperature and the heating energy when the first temperature was measured, and calculating a thermal resistance inside the heat source based on the total thermal resistance.

4. A system measuring thermal conductance of a heat source, the thermal conductance measuring system comprising:

   a thermal conduction modulation unit having a configuration in which a heating element is sandwiched by two thermal conduction media formed from a material with a known thermal conductivity, the heating element being controllable to fluctuate a heat generation amount, the thermal conduction modulation unit being installed to conduct heat from the heat source to one thermal conduction medium of the two thermal conduction media;
   a cooling source having a lower temperature than the heat source, the cooling source being installed to conduct heat from the other thermal conduction medium of the two thermal conduction media;
   a heating element control unit that controls the heating element by applying fluctuating heating energy to the heating element;
   a temperature measurement unit that measures a temperature at a temperature measurement point set at a predetermined position in both or any one of the two thermal conduction media; and
   a calculation processing unit that performs calculation processing, wherein
   the calculating processing unit:

   calculates a difference between a first temperature affected by heat generation by the heating element and a second temperature not affected by heat generation by the heating element, from a measurement result of the temperature measurement unit; and
   calculates the thermal conductance of the heat source based on the difference and the heating energy when the first temperature was measured.

5. The thermal conductance measuring system according to claim 4, wherein

   the heating element is a Peltier element,
   the heating element control unit applies an AC power at a predetermined frequency different from a fluctuating frequency of a heat flow from the heat source as the heating energy, and
   the calculation processing unit extracts data of a frequency component of the predetermined frequency from a calculation result of the difference between the first temperature and the second temperature, and calculates the thermal conductance of the heat source based on the extraction result.

6. The thermal conductance measuring system according to claim 4, wherein

   in the one thermal conduction medium, at least three of the temperature measurement points are set at intervals along a conduction direction of heat from the heat source, and
   the calculation processing unit determines whether or not the heat flow from the heat source is in a steady state by utilizing temperatures measured at the at least three temperature measurement points by the temperature measurement unit and an interval between the at least three temperature measurement points, and calculates the thermal conductance of the heat source when the heat flow has been determined to be in a steady state.

7. The thermal conductance measuring system according to claim 4, wherein

   at least one of the temperature measurement points is set in the one thermal conduction medium, and at least one of the temperature measurement points is set in the other thermal conduction medium, and
   the calculation processing unit determines whether or not an amount of heat passing through the thermal conduction modulation unit is normal, from a magnitude relationship between a temperature measured at the temperature measurement point in the one thermal conduction medium by the temperature measurement unit and a temperature measured at the temperature measurement point in the other thermal conduction medium, and calculates the thermal conductance of the heat source when the heat flow has been determined to be normal.

8. The thermal conductance measuring system according to any one of claims 4 to 7, wherein
   when calculating the thermal conductance of the heat source, the calculation processing unit further calculates a total thermal resistance from the heat source to the thermal conduction path based on the difference between the first temperature and the second temperature and the heating energy when the first temperature was measured, and calculates a thermal resistance inside the heat source based on the total thermal resistance.

EP 4 768 901 A1

FIG. 1

FIG. 2

50

Heat Source

V Heat Source

Heat Exchanger

Heat Extraction Port

R Heat Source

Thermal Bonding Member

R Bonding Material

Thermal Conduction Modulation Unit
12

Passing Heat Amount Modulation R Device

54

Thermal Bonding Member

R Bonding Material

Cooling Source
36

R Cooling Source

EP 4 768 901 A1

FIG. 3

(a)

(b)

(c)

(d)

EP 4 768 901 A1

# FIG. 4

```
                    ┌─────────────┐
                    │    Start    │
                    └──────┬──────┘
                           │
                           ▼
S10 ──┐   ┌──────────────────────────────────┐
      └───│  Connect Thermal Conduction Path  │
          └──────────────────┬───────────────┘
                             │
                             ▼
S20 ──┐   ┌──────────────────────────────────┐
      └───│       Control Heating Element     │
          └──────────────────┬───────────────┘
                             │
                             ▼
S30 ──┐   ┌──────────────────────────────────┐
      └───│        Measure Temperature        │
          └──────────────────┬───────────────┘
                             │
                             ▼
S40 ──┐   ┌──────────────────────────────────┐
      └───│          Determine State          │
          └──────────────────┬───────────────┘
                             │
                             ▼
S50 ──┐   ┌──────────────────────────────────┐
      └───│    Calculate Average Temperature  │
          └──────────────────┬───────────────┘
                             │
                             ▼
S60 ──┐   ┌──────────────────────────────────┐
      └───│        Calculate Difference       │
          └──────────────────┬───────────────┘
                             │
                             ▼
S70 ──┐   ┌──────────────────────────────────┐
      └───│     Extract Frequency Component   │
          └──────────────────┬───────────────┘
                             │
                             ▼
S80 ──┐   ┌──────────────────────────────────┐
      └───│    Calculate Thermal Conductance  │
          └──────────────────┬───────────────┘
                             │
                             ▼
S90 ──┐   ┌──────────────────────────────────┐
      └───│    Calculate Thermal Resistance   │
          └──────────────────┬───────────────┘
                             │
                             ▼
                    ┌─────────────┐
                    │     End     │
                    └─────────────┘
```

# FIG. 5

(a)

(b)

EP 4 768 901 A1

## INTERNATIONAL SEARCH REPORT

| | International application No. |
|---|---|
| | **PCT/JP2024/030308** |

| A. | CLASSIFICATION OF SUBJECT MATTER |
|---|---|

*G01N 25/18*(2006.01)i
FI:   G01N25/18 E

According to International Patent Classification (IPC) or to both national classification and IPC

| B. | FIELDS SEARCHED |
|---|---|

Minimum documentation searched (classification system followed by classification symbols)

G01N25/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2020-118512 A (KOA CORP.) 06 August 2020 (2020-08-06) | 1-8 |
| A | JP 60-029647 A (HITACHI, LTD.) 15 February 1985 (1985-02-15) | 1-8 |
| A | Microfilm of the specification and drawings annexed to the request of Japanese Utility Model Application No. 180004/1979 (Laid-open No. 096355/1981) (SHOWA DENKO KK) 30 July 1981 (1981-07-30) | 1-8 |
| A | CN 115078448 A (HARBIN INSTITUTE OF TECHNOLOGY) 20 September 2022 (2022-09-20) | 1-8 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 October 2024** | **29 October 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/030308**

| Patent document cited in search report | | | Publication date (day/month/year) | Patent family member(s) | | | Publication date (day/month/year) |
|---|---|---|---|---|---|---|---|
| JP | 2020-118512 | A | 06 August 2020 | WO | 2020/153176 | A1 | |
| JP | 60-029647 | A | 15 February 1985 | (Family: none) | | | |
| JP | 56-096355 | U1 | 30 July 1981 | (Family: none) | | | |
| CN | 115078448 | A | 20 September 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5299324 B

- JP 2014174027 A